(19) Europäisches Patentamt
European Patent Office
Office européen des brevets

(11) **EP 2 189 347 B1**

(12) **EUROPEAN PATENT SPECIFICATION**

(45) Date of publication and mention
of the grant of the patent:
**25.05.2011 Bulletin 2011/21**

(51) Int Cl.:
***B60W 40/06*** *(2006.01)*  ***B60W 30/02*** *(2006.01)*
***B62D 6/00*** *(2006.01)*

(21) Application number: **08169838.3**

(22) Date of filing: **25.11.2008**

(54) **Electronic arrangement and method for comparing used friction with available friction**

Elektronische Anordnung und Verfahren zum Vergleichen benutzter Reibung mit verfügbarer Reibung

Agencement électronique et procédé de comparaison de la friction utilisée à la friction disponible

(84) Designated Contracting States:
**DE GB SE**

(43) Date of publication of application:
**26.05.2010 Bulletin 2010/21**

(73) Proprietor: **Ford Global Technologies, LLC
Dearborn, MI 48126 (US)**

(72) Inventors:
• **Lindgren, Thomas
31058 Vessigebro (SE)**
• **Davidsson, Staffan
42668 Västra Frölunda (SE)**

(74) Representative: **VALEA AB
Lindholmspiren 5
417 56 Göteborg (SE)**

(56) References cited:
**EP-A- 1 157 909**     **EP-A- 1 510 428**
**DE-A1-102006 013 788**     **US-A1- 2008 262 692**

**Description**

TECHNICAL FIELD

The present invention relates to an electronic arrangement for a vehicle and a method for comparing used friction with available friction as well as a computer readable storage medium. The electronic arrangement compares the available friction for a vehicle which can be used before the vehicle slips with the friction which the vehicle is using.

BACKGROUND OF THE INVENTION

The number of sensors, electronic devices etc. are increasing in modern vehicles, and as a consequence, the on-board computer gets more and more stressed. Computer process resources are suddenly needed to be economized with. However, safety equipment cannot be compromised with and as such the electronic safety equipment is permitted to utilize any available processing power. One example of this is disclosed in the publication of EP 0312096 in which a friction detecting device is disclosed. The device comprises a running condition detector for detecting a running condition of a vehicle including a lateral acceleration acting on a gravity center of the vehicle, steering angle detector for detecting steering angle of front and rear wheels of the vehicle, vehicle speed sensor, memory for storing stability factors of the vehicle including a vehicle weight, respective distances between the gravity center and front and rear axles, cornering powers acting on the front and rear wheels at a standard condition and a yawing moment of inertia and a control unit for obtaining a frictional coefficient ($\mu$) of a road surface on which the vehicle is running by. Another way of assessing the condition of a road is disclosed in EP 1132271.
EP 1510428 discloses an electronic arrangement as well as a method according to the preamble of claim 1 and claim 12, respectively.
As automotive vehicles get more and more advanced, the driver of such a vehicle is generally presented with more and more information. As such, the driver's attention is constantly subjected to distractions. For instance, distractions such as the radio, velocity meter, vehicle on-board computer or the fuel meter are constantly providing the driver with information. Although it is well known that this information is necessary, care must be taken not to overload a driver with information which could jeopardize the safety of the driving. Hence it has become critical to find electronic arrangements and methods which provide or process information so that the driver easily can absorb the information and preferably a larger amount of information but without adding an unnecessary large burden on the existing electronic system and the on-board computer processing power.
Collected data, e.g. collected with apparatuses as presented above, which provides the driver with information about the road's condition is usually presented as a single warning signal, e.g. in the form of an ice crystal turning red or a flashing warning in the instrument panel indicating that the ABS system is detecting that the vehicles tires are slipping. This kind of processing of the input data signals from the sensors does not help a driver to fully understand a critical situation. For instance, the driver gets no indication of how far from slipping the vehicle is and what is worse, the driver needs to keep watch over two different items usually arranged at two different places in the instrument panel of the vehicle.
It would seem that there is a need for improvements in this area, improvements which deal with the accessibility of the information and which can process that information in an electronic system of a vehicle without unnecessary overloading the electronic system of the vehicle.

SUMMARY OF THE INVENTION

At least one of the drawbacks mentioned above are at least partly solved by an electronic arrangement, a method for using such an electronic arrangement and a computer readable storage medium for executing such a method, according to the present invention. More precisely, the above mentioned drawbacks are at least partly solved by an electronic arrangement for a vehicle for comparing at least the available friction, which the vehicle can be subjected to before slip, and the used friction force which is subjected to the vehicle. The electronic arrangement comprises an input data signal receiver which is arranged to receive at least a first input data signal from at least a first sensor device. The first input data signal is representative of the available friction. A processing unit for processing at least one input data signal and a display unit having a first screen arranged to graphically display the at least one received input data signal.
The electronic arrangement is, preferably via the input data receiver, arranged to receive a second data input signal, from at least a second sensor device and/or from the processing unit processing the first input data signal. The second input data signal is representative of the used friction force. The first input data signal and the second input data signal are plotted as a first and a second graph on the screen in an overlapping manner, one preferred way of doing this is that the first and second graph are each plotted using the same axis. The outcome of the specific manner is that a relationship between the at least one first input data signal and the at least one second input data signal can be provided without actually intermeshing the signals or the data with each other in one single algorithm. As such, vital information can instantly be absorbed by the driver while at the same time processing resources are significantly reduced.

The used friction force corresponds to the acceleration force to which the vehicle is subjected to. If the acceleration force is greater than the force resisting the relative motion of the vehicle and road surface, the vehicle will slide across the surface, i.e. slip. The available force is the maximum force resisting the relative motion of the vehicle's tyres/ wheels and the road surface before slip occurs.

There are at least two different ways to generate the second input data signal. In an embodiment according to the present invention, the processing unit is arranged to process the first input data signal to provide the second input data signal. This can be done by running the input data from the first sensor device through an appropriate algorithm, as is described in greater detail below and/or optionally to receive the second input data signal from a second sensor device. The second input data signal can of course also be processed with the processing unit.

The at least one first sensor device can be selected from the list of the following sensor devices; optical sensors, external vehicle to vehicle information system, vehicle to infrastructure, slip detector (speed differentiation between wheels), yaw rate detector (relation between steering angle and turn radius, or the like. The at least one second sensor device can be selected from the list of the following sensor devices; accelerometer, steering wheel angle sensor, or the like.

In an embodiment according to the present invention, the first and second graphs are further overlapping a third graph, the third graph being representative of the vehicle. By using a third graph, the vehicle itself can be used for e.g. alarm triggering purposes. For instance, one way of triggering an alarm can be when the first or the second graph intersects the third graph.

It has further been seen that if the first graph is generated as a first substantially circle formed graph, a complete overview of the available friction around the vehicle can be provided. As such, several technical advantages are achieved, for instance, the boundaries of the available friction can easily be related or connected to the second graph, i.e. the amount of used friction, independently if the vehicle is turning, breaking, decelerating or accelerating. This saves process resources which can be utilized better for other calculations. The processing of information is moved from the processing unit to the driver, but independently of this, the present invention still simplifies and clarifies the relationship between the available friction and the used friction.

In an embodiment according to the present invention, the second graph is generated as a second substantially circle formed graph. This as well serves the purpose of providing boundaries of the used friction so that the used friction easily can be related or connected to the first graph, i.e. the available friction, independently if the vehicle is turning, breaking, decelerating or accelerating. This has also been shown to save process resources. As an option, the second graph can be in the form of a vector.

In an embodiment according to the present invention, the second graph is generated substantially inside of the first graph. This provides for the advantages that when the second graph tangents or preferably intersects the first graph, this can be used for triggering purposes, such as triggering a visual, audio, tactile alarm or combinations thereof. This triggering mechanism is simpler and more efficient than if a calculation algorithm would be used.

In an embodiment according to the present invention, the arrangement is configured so that the first and/or second graph is continuously updated, preferably each time a first or a second input data signal is received/changed.

The present invention also relates to a method for comparing at least the available friction for a vehicle and the used friction force the vehicle is subjected to by using an electronic arrangement as described above in all its different aspects. The method comprises the steps of; at least one first input data signal is received from at least one sensor device; a second input data signal is generated by processing the at least one input data signal and/or a second input data is received from a second sensor device; the at least one first and second input data signal are displayed as a first and a second graph by means of a display unit. The method further comprises the steps of providing the first and second graphs in an overlapping manner to represent a relationship between the at least one first and second input data signal. The method according to the present invention enables a driver to absorb vital information while at the same time releases free processing capacity since no advanced algorithms are needed to calculate the relationship between the available friction and the used friction.

As is understood when reading the above, the present invention provides for a method and an arrangement in which the available friction and the used friction force are determined/measured/calculated separately and then representations thereof are provided on the same graph/plot simultaneously.

The present invention further relates to a computer readable storage medium having at least one algorithm for executing a method as described above.

It should be further understood that the present invention can be further modified, for instance, the display means, i.e. the display unit, can be external from the vehicle to permit remote analysis/control.

The first or the second graphs does not have to indicate the direction in which the vehicle will slide. The relationship between the first and the second graph can further be used to automatically control steering/breaking/acceleration if the vehicle slides. It may optionally be used to provide the driver with alarm/information telling the driver to "slow down", "steer left", "steer right", "increase throttle", etc. It should further be noted that predictions can be shown to indicate if a vehicle is about to slip, for instance, the second graph can be complemented with a forth graph which shows a predicted used friction in the imminent future. Optionally the second graph can be increased with a factor to give the driver an early warning or the first graph can be decreased with a factor, to serve the same purpose. Furthermore, if the first and the second graph intersect, the vehicle can instructed to neglect an increased throttle, thereby effectively prevent the vehicle from increasing in speed if the vehicle is about to slip.

BRIEF DESCRIPTION OF THE DRAWINGS

The present invention will be described in greater detail with reference to the accompanying figures wherein;

figure 1 shows a schematic overview of an electronic arrangement according to the present invention;
figure 2a-2c shows changes in the available friction as a function of changing weather conditions;
figure 3a-3d shows changes in the used friction as a function of changing driving conditions and;
figure 4 shows the first and the second graph as they are plotted in an overlapping manner.

DETAILED DESCRIPTION OF PREFERRED EMBODIMENTS

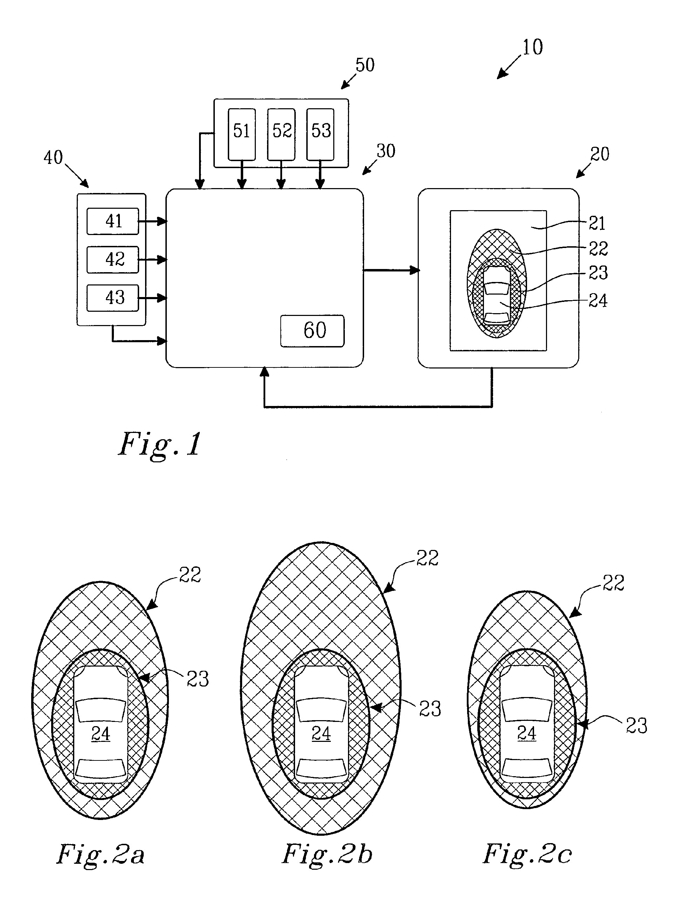

Figure 1 shows a schematic overview of an arrangement 10 for comparing at least the available friction and an acceleration force, also referred to as the "used friction", to which a vehicle is subjected, according to one embodiment of the present invention. Hereafter, as an illustrative example, an automotive vehicle, e.g. a car, which is traveling on a relatively new asphalt road, is used to illustrate the present invention. It is further theorized that the automotive vehicle is equipped with new tires adapted for driving during the summer season in a Nordic country, such as Sweden. It is however readily understood when reading this description that the present invention can be utilized on other vehicles which may run the risk of slipping from the surface on which they are traveling.

The individual parts of the arrangement 10 will first be described whereafter the function and the use of the arrangement 10 will be further described. The arrangement 10 comprises a display unit 20, which usually is positioned inside the passenger compartment of the automotive vehicle (not shown) so that preferably the driver of the vehicle has full view and access to the display unit 20. The display unit 20 comprises a screen 21 onto which input data can be visualized. A signal and data receiver 30 is communicates with the display unit 20 to provide the display unit 20 with appropriate data which is intended to be displayed on the screen 21 of the display unit 20. The arrangement 10 is configured to generate at least a first and a second graph 22, 23 which are displayed on the screen 21 of the display unit 20 in an overlapping manner, as will be described in greater detail below. The signal and data receiver 30 communicates with a plurality of sensors, detectors and optionally processing units to provide data which is used for comparing at least the available friction and the used friction force which the automotive vehicle is subjected to.

In figure 1, a first and a second block 40, 50 of information collecting and/or analysing devices are shown as they communicate with the signal and data receiver 30, as indicated by the arrows. Although only a one way communication is illustrated by the arrows, two way communications are of course possible. The first block 40 has the main purpose of providing information for a first input data signal which is representative of the available friction which the automotive vehicle can be subjected to before the vehicle slip, and from which a first graph 22 is generated on the screen 21 of the display unit 20. The first block 40 can for instance comprise a plurality of sensors, detectors or processing units from which the appropriate information is collected. As non limiting examples; the first block 40 can be provided with a optical sensors, external vehicle to vehicle information system 41, yaw rate detector 42, a road surface property sensor 43. For instance, a road surface property sensor which can be used according to the present invention is a road friction detector described in the U.S. patent with no. US 6,166,645. Of course other and/or additional sensors or detectors, such as a tire temperature sensors, environment temperature sensors, humidity sensors, tire pattern depth sensors, steering wheel position sensor, etc can be present to provide an accurate reading or estimation of the available friction which the automotive vehicle can be subjected to before slipping.

From the information gathered via the first block 40, a first graph 22 is generated and displayed on the screen 21 of the displaying unit 20. In figure 1, the graph is represented by a substantially oval circle, which represents the available friction around the automotive vehicle. As such, the first graph 22 is a visual measure of just how much force the automotive vehicle can be subjected to before it starts to slip.

The second block 50 has the main purpose of providing information for a second input data signal which is representative of the acceleration and/or retardation forces which the automotive vehicle are subjected to and as such it is a measure of the used friction. As a non limiting example, the second block 50 can comprise an accelerometer, a steering wheel angle sensor or the like, although other sensors can be present to provide an accurate reading or estimation of the acceleration forces which the automotive vehicle are subjected to.

From the information gathered via the second block 50 a second graph 23 is generated and displayed on the screen 21 of the displaying unit 20. The second graph 23 is representative for the acceleration forces which the automotive vehicle is subjected to. In figure 1, the second graph 23 is shown a substantially oval circle, which represents the acceleration force which the automotive vehicle is subjected to. Although in practice and as is outlined below, the second graph 23 is a vector which for the sake of the driver is illustrated as an oval circle as this has been found to inform the driver of the used friction in a simple manner.

As can further be seen, the displaying unit 20 further illustrates a vehicle with reference 24 which is used as a reference point for the first graph 22 and the second graph 23. In this case, a selected centre point in the vehicle 24 is used as origin of coordinates for the first and the second graph 22, 23.

The first and second blocks 40, 50 can be arranged to communicate with the signal and data receiver 30 individually or optionally, each sensor can communicate directly with the signal and data receiver 30. A processing unit 60, in this case a computer, is connected to the signal and data receiver 30 to process the incoming data signal from the first and/or the second block(s) 40, 50. The processing unit 60 can for instance be configured to scale at least one of the first and second graphs 22, 23 to provide for an appropriate relationship between the first and the second graph 22, 23 and/or to convert the signal to appropriate protocol language. Optionally the processing unit 60 can be used to calibrate the output information from the first and the second block 40, 50 with the actual properties of the automotive vehicle. This would increase the accuracy during the detection of the different parameters. The processing unit 60 may of course be used to process data with an appropriate algorithm to enable the plotting of the first and the second graph 22, 23.

The displaying unit 20, the processing unit 60 and the signal and data receiver 30 can of course be integrated with each other or optionally separated from each other as separate components which communicate with each other. It may be that two of the components are integrated and the third component is a separate communicating component.

Figures 2a-2c show three different cases of available friction which the automotive vehicle can be subjected to before slip. In these three examples, the difference in available friction differs, as a function of the weather, i.e. due differences in the weather conditions. As can be seen in figures 2a-2c, the figures show the first graph 22 plotted as an ellipse. Inside the first graph 22, the second graph 23 is plotted also as an ellipse. The vehicle reference 24 is further plotted overlapping both the first and the second graph 22, 23. As such, it can be said that first and second graphs 22, 23 overlap. Furthermore, the first and second graphs 22, 23 have been manipulated to provide for a new combined graph from which it is possible to derive substantially more information as when compared with the first graph 22 or the second graph 23 by itself. Furthermore, the input data from the first and the second blocks 40, 50 does not need to be combined in a single algorithm, saving processing time and processing resources.

Figure 2a illustrates the first graph 22 as provided by information, i.e. readings, from the sensors of the first block 40, during a day with a normal air humidity, temperature, and atmospheric pressure, e.g. 50 % relative air humidity, 25 °C and 101.3 kPa. As such the available friction is estimated, or directly calculated as illustrated as the first graph 22. The second graph 23 has been provided by information, i.e. readings, from the sensors of the second block 50 as the automotive vehicle is driving with about 50 km/h, straight ahead on a flat asphalt road without turning, as such, the second graph 23 remains constant throughout figures 2a-2c. The second graph 23, which is plotted inside the first graph 22, can be seen as having a medium distance from the first graph 22 and the vehicle reference 24, as compared with figure 2b-2c. This is a consequence of the automotive vehicle being subjected to acceleration forces are not vectors, i.e. the automotive vehicle is not subjected to any specific increasing or decreasing acceleration forces.

Figure 2b illustrates the first graph 22 as the readings from the first block 40 have been made during a hot day, e.g. 30 % relative air humidity, 35 °C and an atmospheric pressure of about 105.3 kPa, which provides for increased friction and better traction between the tires and the road. As such, the distance between the first and the second graphs 22, 23 and the vehicle reference 24, has increased, as compared with figure 2a, to represent the increased available friction provided by the hot weather.

In figure 2c the first graph 22 is shown as the readings from the first block 40 have been made during a rainy day, e.g. 80 % relative air humidity, 20 °C and an atmospheric pressure of about 99.3 kPa, which provides for decreased friction between the tires and the road and thus poor traction. As such, the distance between the first and the second graphs 22, 23 and the vehicle reference 24, has decreased, as compared with figure 2a, to represent the decreased available friction provided by the rainy weather.

As can be understood, the present invention already at this stage can be used by a driver to directly estimate the driving time to a selected destination. For instance, as shown in figure 2c, if the available friction is low, it can be assumed that it will take longer time to drive to the selected destination as the driver has to be more precautions when driving as compared with e.g. when driving in the conditions as shown in figure 2b.

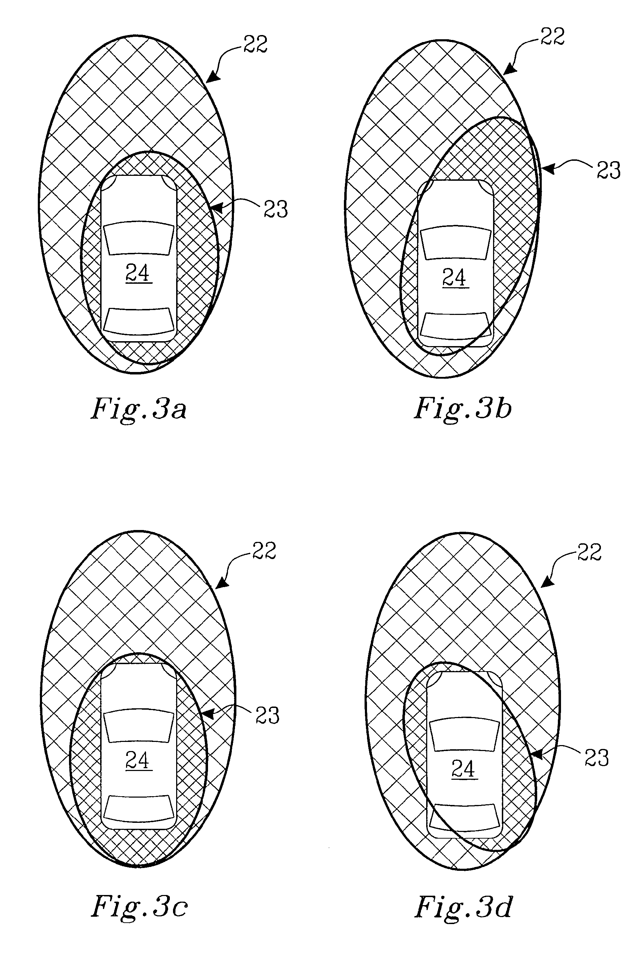

In figures 2a-2c, the impact of a weather change has been used to illustrate how the first graph 22, i.e. the friction force, can be affected. However, the second graph 23, i.e. the acceleration force, i.e. the used friction force, can also be subject to changes, as the information gathered by the second block 50 is plotted as a graph or optionally if information provided directly form the processing unit 60 is used. This will be described with reference to figures 3a-3d. In the following examples the weather parameter is kept constant, i.e. the available friction is constant. The weather conditions in the examples described with reference to figures 3a-3d are equivalent with the weather condition described with reference to figure 2a.

Figure 3a illustrates the automotive vehicle during a left turn. As can be seen, the second graph 23 is tangentially disposed to the first graph 22 at about four o'clock and displaced with respect to the vehicle reference 24. This would directly indicate that at least one tire of the vehicle is just about to slip, i.e. the tires are losing their grip with the surface of the road. The reference to the clock should be understood as a reference for orientation at which the first graph 22 is the circle of the clock having 12 at the top, six at the bottom, three to the right and nine to the left. Figure 3b shows the same left turn during braking with the automotive vehicle. As can be seen, the second graph 23 has crossed the first graph 22 at about two o'clock, a clear indication that the automotive vehicle has exceeded the available friction with the used friction and that the automotive vehicle is slipping.

Figure 3c shows how the automotive vehicle accelerates. The second graph 23 is tangentially disposed to the first graph 22 at about six o'clock. Figure 3d shows the automotive vehicle during a left turn while accelerating. The second graph 23 is tangent to the first graph 22 at about five o'clock. Again, the vehicle is just about to loose its grip with the road.

With reference to figures 2a-3d it has been illustrated, graph by graph, how the first and the second graph 22, 23 will change dependent upon the available friction and the actual used friction, in the form of the acceleration force on the vehicle, based on the output from the first and the second block 40, 50. It is however well within the boundaries of the present invention that only one of the first or second graph 22, 23 is changed. This can be achieved for instance by scaling the second graph 23 as the available friction change, in a specific direction. Hence in an embodiment according to the present invention, the first and the second graph does not need to be on the same X- and Y-axis, it's the intermeshing of the first and the second graph 22, 23 which provides for the contribution to the art.

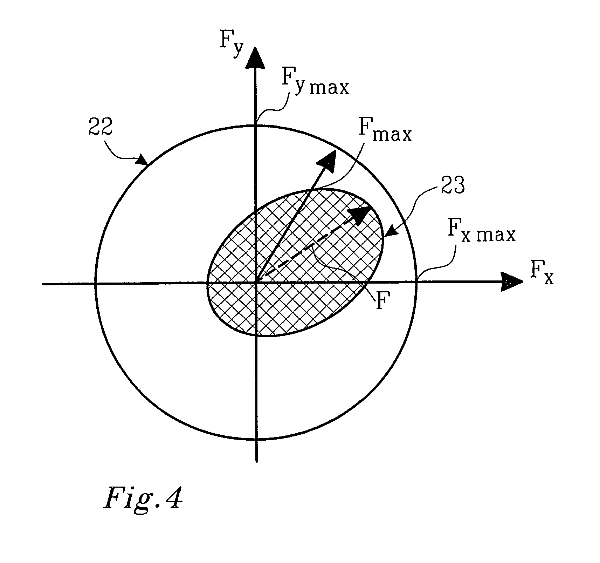

With reference to figure 4 and as outlined below, algorithms for rendering the first and the second graph 22, 23 will be described hereafter.

The first graph 22, hereafter named available friction circle (ellipse), can be described by:

$$\left(\frac{F_y}{F_{max}}\right)^2 + \left(\frac{F_x}{F_{max}}\right)^2 = 1 \quad (1)$$

$F_{max}$ in general can be computed differently in x and y directions as
$F_{max} = \mu_i F_z$, where i=x,y and $F_z$=m·g. Equation (1) determines the maximum available friction circle.

Equation (1) holds for limiting handling and describes the maximum available forces in the current condition. That is, once the maximum available force is exceeded, the vehicle will slip as the friction forces of the vehicle are higher than the available friction force provided by the local terrain, e.g. the road.

Inside the available friction circle (ellipse), one can use the following relations:

$$F_y = F_{y0}\sqrt{1 - \left(\frac{F_x}{F_{max}}\right)}, \quad (2)$$

Where $F_{y0}$ is the pure lateral cornering force, that is, when no braking or driving force is applied it is given by:

$$F_{y0} = C\sigma_y = C\frac{v_y}{v_x} \quad (3)$$

where C is the cornering stiffness, $v_x$ is the longitudinal speed and $v_y$ is the lateral speed of the axle. At the limits eq. (2), tends to eq. (1).

Another approach for computing $F_y$ on the front and rear wheel axes from the sensors is:

$$F_{FA\_est} = \frac{ma_y + \dfrac{J_z\ddot{\psi}}{\ell_r}}{1 + \dfrac{\ell_f}{\ell_r}} \quad (4) \quad F_{RA\_est} = \frac{ma_y - \dfrac{J_z\ddot{\psi}}{\ell_f}}{1 + \dfrac{\ell_r}{\ell_f}}$$

Where $I_f$ and $I_r$ are the distances of the axes to the center of gravity.
Where $a_y$ is measured and yaw rate is measured and used to compute the yaw acceleration.
A combination of eq. (2),(3) and (4) can be used, where $F_x$ can be computed from the wheel speed sensor measurements.

This way given at a point determined by $F_x$ and $F_y$, a unique vector F is computed that determines a unique used friction circle, i.e. the second graph 23 e.g. as illustrated in figure 4.

Variables used above:

$F_x$ - longitudinal force
$F_y$ - lateral force
$F_{xmax}$ - maximum achievable longitudinal force
$F_{ymax}$ - maximum achievable lateral force
$F_{max}$ - maximum achievable total force
$F_z$ - normal force
$\mu_i$ - maximum friction coefficient
$F_{y0}$ - is the pure lateral cornering force
C - is the cornering stiffness
$V_x$ - is the longitudinal speed
$V_y$ - is the lateral speed of the axle.
$J_z$ - inertia of the vehicle around the z axis
$I_f$ - distances between the front axes to the center of gravity.
$I_r$ - distances between the rear axes to the center of gravity.
dot Psi - yaw rate
$a_y$ - lateral acceleration
$F_{FA\_est}$ - lateral force estimate on the front axes
$F_{RA\_est}$ - lateral force estimate on the rear axes
Sigma_y - lateral slip

The present invention also relates to a computer readable storage medium, such as a hard drive, comprising at least one algorithm to enable the first and the second graph to be plotted in an overlapping manner, or preferably using the same axis, as outlined above.

**Claims**

1. An electronic arrangement for a vehicle for comparing an available friction and the used friction force which said vehicle is subjected to, said electronic arrangement (10) comprises;
   a input data signal receiver (30) which is arranged to receive at least a first input data signal from at least a first sensor device (41, 42, 43), said first input data signal being representative of said available friction;
   a processing unit (60) for processing at least one input data signal;
   a display unit (20) having a first screen (21) arranged to graphically display the at least one said received input data signal;
   **characterized in**
   **that** said electronic arrangement (10) is further arranged to receive a second data input signal, from at least a second sensor device (51, 52, 53) and/or from said processing unit (60) processing said first input data signal, said second input data signal being representative of said used friction force, and in that
   said first input data signal and said second input data signal are plotted as a first and a second graph (22, 23) on said screen (21) in an overlapping manner to present a relationship between said at least one first input data signal and said second input data signal.

**2.** The arrangement according to claim 1, **characterized in that** said processing unit (60) is arranged to process said first input data signal to provide said second input data signal.

**3.** The arrangement according to claim 1 or 2, **characterized in that** said second input data signal is provided from a second sensor device (51, 52, 53).

**4.** The arrangement according to any preceding claims, **characterized in that** said at least one sensor device (41, 42, 43) is selected from the list of the following sensor devices; optical sensors, external vehicle to vehicle information system, vehicle to infrastructure, slip detector, yaw rate detector, or the like.

**5.** The arrangement according to any of the preceding claims, **characterized in that** said at least one second sensor device (51, 52, 53) is selected from the list of the following sensor devices; accelerometer, steering wheel angle sensor, or the like.

**6.** The arrangement according to any of the preceding claims, **characterized in that** said first and second graphs (22, 23) are further overlapping a third graph (24), said third graph being representative of said vehicle.

**7.** The arrangement according to any of the preceding claims, **characterized in that** said first graph (22) generated as a first substantially circle formed graph (22).

**8.** The arrangement according to any of the preceding claims, **characterized in that** said second graph (23) is generated as a second substantially circle formed graph (23).

**9.** The arrangement according to any of the claims 6-8, **characterized in that** said second graph (23) is generated substantially inside of said first graph (22).

**10.** The arrangement according to any of the preceding claims, **characterized in that** said arrangement (10) is configured so that said first and second graphs (22, 23) are continuously updated each time a first or second input data signal is received/changed.

**11.** The arrangement according to claim 10, **characterized in that** said arrangement (10) is configured to provide for a responsive output data signal, such as a visual, audio or tactile alarm, if said first and second graphs (22, 23) intersect each other.

**12.** Method for comparing at least the available friction for a vehicle and the used friction said vehicle is subjected to, by using an electronic arrangement according to any preceding claims, wherein;
said at least one first input data signal is received from at least one sensor device (41, 42, 43);
a second input data signal is generated by processing said at least one input data signal and/or a second input data is received from a second sensor device (51, 52, 53);
said at least one first and second input data signal are displayed as a first and a second graph by means of a display unit (20);
**characterized in**
**that** said method comprises the step of providing said first and second graphs (22, 23) in an overlapping manner to represent a relationship between said at least one first and second input data signal.

**13.** A computer readable storage medium **characterized in that** said medium comprises at least one algorithm for executing a method according to claim 12.

**Patentansprüche**

**1.** Eine elektronische Anordnung für ein Fahrzeug zum Vergleichen einer verfügbaren Reibung und der genutzten Reibungskraft, der das Fahrzeug unterworfen wird, wobei die elektronische Anordnung (10) folgendes umfasst:

einen Empfänger (30) von Dateneingangssignalen, der dazu ausgelegt ist, wenigstens ein erstes Dateneingangssignal von einer ersten Sensorvorrichtung (41, 42, 43) zu empfangen, wobei das erste Dateneingangssignal Ausdruck der verfügbaren Reibung ist;
eine Verarbeitungseinheit (60) zum Verarbeiten von mindestens einem Dateneingangssignal;

und ein Anzeigegerät (20), das einen ersten Bildschirm (21) hat, der dafür eingerichtet ist, das wenigstens eine empfangene Dateneingangssignal graphisch darzustellen;

**dadurch gekennzeichnet, dass** die elektronische Anordnung (10) des weiteren dafür eingerichtet ist, ein zweites Dateneingangssignal von mindestens einer zweiten Sensorvorrichtung (51, 52, 53) und / oder von der Verarbeitungseinheit (60), die das erste Dateneingangssignal verarbeitet, zu empfangen, wobei das zweite Dateneingangssignal Ausdruck der genutzten Reibungskraft ist, und **dadurch**, dass

das erste Dateneingangssignal und das zweite Dateneingangssignal als ein erster und ein zweiter Graph (22, 23) auf dem Bildschirm (21) in einer überlappenden Weise eingezeichnet werden, um eine Beziehung zwischen dem mindestens einen ersten Dateneingangssignal und dem zweiten Dateneingangssignal darzustellen.

2. Die Anordnung nach Anspruch 1, **dadurch gekennzeichnet, dass** die Verarbeitungseinheit (60) dafür eingerichtet ist, das erste Dateneingangssignal zu verarbeiten, um das zweite Dateneingangssignal zu erbringen.

3. Die Anordnung nach Anspruch 1 oder 2, **dadurch gekennzeichnet, dass** das zweite Dateneingangssignal von einer zweiten Sensorvorrichtung (51, 52, 53) zur Verfügung gestellt wird.

4. Die Anordnung nach einem der vorhergehenden Ansprüche, **dadurch gekennzeichnet, dass** die mindestens eine Sensorvorrichtung (41, 42, 43) aus der Liste der folgenden Sensorvorrichtungen ausgewählt ist: optische Sensoren, externes "von Fahrzeug zu Fahrzeug" - Informationssystem, "Fahrzeug zu Infrastruktur", Schlupfdetektor, Giergeschwindigkeitsdetektor oder Ähnliches.

5. Die Anordnung nach einem der vorhergehenden Ansprüche, **dadurch gekennzeichnet, dass** die mindestens eine zweite Sensorvorrichtung (51, 52, 53) aus der Liste der folgenden Messgeräte ausgewählt ist: Beschleunigungsmesser, Lenkradwinkel-Sensor oder Ähnliches.

6. Die Anordnung nach einem der vorhergehenden Ansprüche, **dadurch gekennzeichnet, dass** sich die ersten und zweiten Graphen (22, 23) des weiteren mit einem dritten Graphen (24) überlappen, wobei der dritte Graph zur Darstellung des Fahrzeugs dient.

7. Die Anordnung nach einem der vorhergehenden Ansprüche, **dadurch gekennzeichnet, dass** der erste Graph (22) als ein erster im wesentlichen kreisförmiger Graph (22) erzeugt wird.

8. Die Anordnung nach einem der vorhergehenden Ansprüche, **dadurch gekennzeichnet, dass** der zweite Graph (23) als ein zweiter im wesentlichen kreisförmiger Graph (23) erzeugt wird.

9. Die Anordnung nach einem der Ansprüche 6 bis 8, **dadurch gekennzeichnet, dass** der zweite Graph (23) im wesentlichen innerhalb des ersten Graphs (22) erzeugt wird.

10. Die Anordnung nach einem der vorhergehenden Ansprüche, **dadurch gekennzeichnet, dass** die Anordnung (10) so konfiguriert ist, dass der erste und der zweite Graph (22, 23) ständig aktualisiert werden sobald ein erstes oder zweites Dateneingangssignal empfangen / verändert wird.

11. Die Anordnung nach Anspruch 10, **dadurch gekennzeichnet, dass** die Anordnung (10) so konfiguriert ist, dass sie ein reagierendes Datenausgangsignal, etwa einen sichtbaren, hörbaren oder fühlbaren Alarm, zur Verfügung stellt, wenn der erste und der zweite Graph (22, 23) einander schneiden.

12. Verfahren zum Vergleichen von zumindest der verfügbaren Reibung für ein Fahrzeug und der genutzten Reibung, der das Fahrzeug unterworfen wird, unter Nutzung einer elektronischen Anordnung nach einem der vorhergehenden Ansprüche, wobei

das mindestens eine erste Dateneingangssignal von mindestens einer Sensorvorrichtung (41, 42, 43) empfangen wird;

ein zweites Dateneingangssignal durch Verarbeiten des mindestens einen ersten Dateneingangssignals erzeugt wird und/oder ein zweites Dateneingangssignal von einer zweiten Sensorvorrichtung (51, 52, 53) empfangen wird; das mindestens eine erste und zweite Dateneingangssignal als ein erster und ein zweiter Graph mit Hilfe eines Anzeigegerätes (20) dargestellt werden;

**dadurch gekennzeichnet, dass** die Methode den Schritt der Erstellung der ersten und zweiten Graphen (22, 23) in einer überlappenden Weise umfasst, um eine Beziehung zwischen dem mindestens ersten und dem zweiten Dateneingangssignal darzustellen.

**13.** Ein mittels Computer lesbares Speichermedium, **dadurch gekennzeichnet, dass** das Medium mindestens einen Algorithmus zur Durchführung eines Verfahrens nach Anspruch 12 umfasst.

**Revendications**

**1.** Ensemble électronique destiné à un véhicule pour comparer un frottement disponible et la force de frottement utilisée à laquelle est soumis ledit véhicule, ledit ensemble électronique (10) comprenant :

un récepteur (30) de signaux de données d'entrée qui est adapté pour recevoir au moins un premier signal de données d'entrée d'au moins un premier dispositif de capteur (41, 42, 43), ledit premier signal de données d'entrée étant représentatif dudit frottement disponible ;
une unité de traitement (60) pour traiter au moins un signal de données d'entrée ;
une unité d'affichage (20) ayant un premier écran (21) adapté pour afficher graphiquement ledit au moins un signal reçu de données d'entrée ;
*caractérisé*
*en ce que* ledit ensemble électronique (10) est en outre adapté pour recevoir un deuxième signal de données d'entrée d'au moins un deuxième dispositif de capteur (51, 52, 53) et/ou de ladite unité de traitement (60) traitant ledit premier signal de données d'entrée, ledit deuxième signal de données d'entrée étant représentatif de ladite force de frottement utilisée, et
*en ce que* ledit premier signal de données d'entrée et ledit deuxième signal de données d'entrée sont représentés graphiquement sous forme d'un premier et d'un deuxième graphiques (22, 23) sur ledit écran (21), en recouvrement, pour présenter une relation entre ledit au moins un premier signal de données d'entrée et ledit deuxième signal de données d'entrée.

**2.** Ensemble selon la revendication 1, *caractérisé en ce que* ladite unité de traitement (60) est adaptée pour traiter ledit premier signal d'entrée pour fournir ledit deuxième signal de données d'entrée.

**3.** Ensemble selon la revendication 1 ou 2, *caractérisé en ce que* ledit deuxième signal de données d'entrée est fourni par un deuxième dispositif de capteur (51, 52, 53).

**4.** Ensemble selon l'une quelconque des revendications précédentes, *caractérisé en ce que* ledit au moins un dispositif de capteur (41, 42, 43) est choisi dans la liste de dispositifs de capteur suivants : capteurs optiques, système d'information externe entre véhicules, véhicule-infrastructure, détecteur de glissement, détecteur de vitesse angulaire en lacet, ou éléments similaires.

**5.** Ensemble selon l'une quelconque des revendications précédentes, *caractérisé en ce que* ledit au moins un deuxième dispositif de capteur (51, 52, 53) est choisi dans la liste de dispositifs de capteur suivants : accéléromètre, capteur d'angle du volant de direction, ou éléments similaires.

**6.** Ensemble selon l'une quelconque des revendications précédentes, *caractérisé en ce que* lesdits premier et deuxième graphiques (22, 23) sont en recouvrement sur un troisième graphique (24), ledit troisième graphique étant représentatif dudit véhicule.

**7.** Ensemble selon l'une quelconque des revendications précédentes, *caractérisé en ce que* ledit premier graphique (22) est généré sous forme d'un premier graphique de forme sensiblement circulaire.

**8.** Ensemble selon l'une quelconque des revendications précédentes, *caractérisé en ce que* ledit deuxième graphique (23) est généré sous forme d'un deuxième graphique sensiblement circulaire (23).

**9.** Ensemble selon l'une quelconque des revendications 6 à 8, *caractérisé en ce que* ledit deuxième graphique (23) est généré sensiblement à l'intérieur dudit premier graphique (22).

**10.** Ensemble selon l'une quelconque des revendications précédentes, *caractérisé en ce que* ledit ensemble (10) est configuré de façon que lesdits premier et deuxième graphiques (22, 23) soient continuellement mis à jour chaque fois qu'un premier ou un deuxième signal de données d'entrée est reçu/modifié.

**11.** Ensemble selon la revendication 10, *caractérisé en ce que* ledit ensemble (10) est configuré pour fournir un signal de données de sortie dynamique, par exemple une alarme visuelle, audio ou tactile, si lesdits premier et deuxième graphiques (22, 23) s'intersectent.

12. Procédé pour comparer au moins le frottement disponible pour un véhicule avec le frottement utilisé auquel le véhicule est soumis, en utilisant un ensemble électronique selon l'une quelconque des revendications précédentes, dans lequel :

ledit au moins un premier signal de données d'entrée est reçu d'au moins un premier dispositif de capteur (41, 42, 43) ;
un un deuxième signal de données d'entrée est généré en traitant ledit au moins un signal de données d'entrée et/ou un deuxième signal de données d'entrée est reçu d'un deuxième dispositif de capteur (51, 52, 53) ;
lesdits au moins un premier et un deuxième signaux de données d'entrée sont affichés, sous forme d'un premier et d'un deuxième graphiques, au moyen d'une unité d'affichage (20) ;
***caractérisé en ce que*** ledit procédé comprend l'étape de fourniture desdits premier et deuxième graphiques (22, 23) de manière qu'ils soient en recouvrement pour représenter une relation entre lesdits au moins un premier et un deuxième signaux de données d'entrée.

13. Support de stockage informatique, ***caractérisé en ce que*** ledit support comprend au moins un algorithme pour l'exécution d'un procécé selon la revendication 12.

*Fig.1*

*Fig.2a*          *Fig.2b*          *Fig.2c*

*Fig.3a*

*Fig.3b*

*Fig.3c*

*Fig.3d*

*Fig.4*

**EP 2 189 347 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0312096 A
- EP 1132271 A
- EP 1510428 A
- US 6166645 A